# DEMANDE DE BREVET EUROPEEN

(11) **EP 2 891 532 A1**
(43) Date de publication de la demande: **08.07.2015**
(21) Numéro de dépôt: 14199009.3
(22) Date de dépôt: 18.12.2014
(51) Int. Cl.: B22D 18/02, C22F 1/18, B23P 15/02

(54) **Procédé de fabrication de pièces en titane issues d'une opératiopn de fonderie suivie d'une opération de forge desdites pièces**

(30) Priorité: 23.12.2013 FR 1363385
(71) Demandeur: Saint Jean Industries, 69220 Saint-Jean d'Ardières (FR)
(72) Inventeur: DI SERIO, Emile Thomas, 69840 CHENAS (FR)
(74) Mandataire: Cabinet Laurent & Charras

(57) **Abrégé**

Le procédé de fabrication d'une pièce en titane se caractérise en ce que :
- on coule du titane pour obtenir la pièce après solidification au plus proche de la forme finale,
- on démoule la pièce après la coulée,
- on réchauffe la pièce,
- on positionne la pièce coulée dans une matrice pour la soumettre à une opération combinée de pressage et de forgeage pour obtenir la forme finale de la pièce.

## Description

L'invention se rattache au secteur technique de la fabrication de pièces en titane pour la réalisation notamment et non limitativement de composants et équipements pour véhicules.

La fabrication de pièces en titane est réalisée à ce jour de deux manières, soit par une opération de fonderie, soit par une opération de forge.

Traditionnellement, la fabrication de pièces de titane de fonderie repose sur la combinaison de 2 opérations afin d'assurer une qualité maximale du produit fini:
- Une opération de fonderie (par exemple en cire perdue sous vide).
- Une opération de Hot Isostatic Pressing (HIP) (Pressage à chaud isostatique).

L'opération de HIP a pour but de refermer les porosités et µ-porosités de fonderie liées à la difficile solidification des pièces (intervalle de solidification court). Elle est indispensable pour des pièces structurelles obtenues en fonderie afin de garantir la tenue en service.

D'autre part, dans une seconde mise en oeuvre, les pièces en titane peuvent être issues de forge, à partir d'un lopin avec des fortes surépaisseurs par rapport à la pièce finie, entraînant une grande consommation de matière, des temps d'usinage et une consommation d'outils de coupe élevés.

Ces deux procédés présentent de notables inconvénients :

L'opération de HIP (Pressage à Chaud Isostatique) est coûteuse, les temps de maintien sont longs et contraignants (deux opérations successives, à savoir : une première opération à 1000 bar, environ, 1000 °C, sous Argon, puis une seconde opération à environ 800°C, 2h sous vide à une pression de 10-4 bar). Les quantités par charge sont limitées.

Le but recherché, selon l'invention, est de réduire ces contraintes et le coût tout en conservant une performance équivalente en limite élastique, limite à rupture et allongement.

Dans le cadre des opérations de forgeage, les passes d'usinage dans un lopin avec des fortes surépaisseurs par rapport à la pièce finie représentent un temps important et une quantité de copeaux élevée pour répondre à un besoin en pièces issues de forge mais ces pièces ne nécessitent pas toujours des µ-structures spécifiques, on cherche alors à réduire la quantité de matière mise en oeuvre et les temps d'usinage.

La problématique à résoudre était de rechercher une solution qui permette d'obvier aux inconvénients précités tout en tenant compte des contraintes liées à la nature du matériau traité, à savoir le titane qui répond à des spécificités très particulières.

La démarche du Demandeur a été dans un premier temps de rechercher de possibles améliorations des procédés existants mais sans modifier la nature des opérations. Les résultats sont restés peu convaincants.

La démarche du Demandeur est d'examiner une modification substantielle des procédés actuels de fabrication des pièces en titane à partir d'une autre technologie dont elle est l'initiatrice et qu'elle a développé d'une manière considérable pour des pièces en aluminium et/ou en alliage d'aluminium. Cette dernière technologie est décrite dans les brevets EP 0 119 365 et 0 955 113 qui visaient un procédé consistant à couler de l'aluminium ou un alliage d'aluminium pour obtenir une pièce métallique après solidification, et par le fait qu'après la coulée on démoule la pièce, puis on la réchauffe dans un four tunnel, on la place dans une matrice pour pressage pour exercer sur la pièce coulée un effet combiné de pressage et de forge. Cette technologie, commercialisée sous la marque COBAPRESS au nom du Demandeur, a fait l'objet de plusieurs développements matéralisés par des brevets au nom du Demandeur.

La possibilité d'un tel transfert de technologie était loin d'être évident en égard de la nature des matériaux différents que sont l'aluminium ou alliage d'aluminium d'une part et le titane d'autre part, et leurs caractéristiques spécifiques.

En outre, en considérant que le brevet EP 0 119 365 a été déposé en 1983 et relève du Domaine Public depuis de nombreuses années maintenant, force est de constater que la technologie mettant en oeuvre les deux opérations successives de coulage d'aluminium ou d'alliage d'aluminium, puis de forgeage, a largement été reprise et utilisée par la concurrence avec des brevets de perfectionnements. Il n'y a eu, par contre, aucune recherche ou tentative de recherche à la connaissance du Demandeur pour une telle application de ce procédé sur des pièces en titane.

Toute la démarche du Demandeur a donc été de procéder à une telle analyse et des tests qui ont permis d'une manière surprenante de faire apparaître des avantages spécifiques et substantiels dans l'application de ce procédé coulage/forgeage sur des pièces en titane.

La solution développée, selon une première caractéristique de l'invention, consiste à obtenir une pièce constituant une préforme en un matériau titane en fonderie au plus proche de la forme finale puis à forger cette préforme en 1 étape entre deux matrices comprenant la forme finale de la pièce.

On obtient ainsi la pièce à sa forme finale, qui après ébavurage, présente les dimensions fonctionnelles pour répondre au besoin sans nécessiter d'usinages supplémentaires autres que les zones fonctionnelles avec des intervalles de tolérance restreints.

Les pièces brutes de fonderie ont les caractéristiques mécaniques présentées dans le tableau n° 1 et sont comparées aux pièces après procédé traditionnel de fonderie suivi d'une opération HIP (Pression à Chaud Isostatique).

Ce tableau fait apparaître des caractéristiques supérieures d'allongement liées à la refermeture des défauts.

**Tableau n°1: Caractéristiques mécaniques sur pièces brutes de fonderie et pièces après opération de HIP.**

| | **Rp0,2 [Mpa]** | **Rm [Mpa]** | **A% [%]** |
|---|---|---|---|
| Fonderie sans alpha-case | 874 | 946 | 6,5 |
| Fonderie avec alpha-case | 821 | 871 | 7,2 |
| Fonderie + HIP | 843 | 905 | 9,5 |

Dans le tableau précité et les tableaux suivants 2 et 3,
- L'expression alpha-case signifie couche d'oxydation,
- Rp : limite élastique,
- Rm : Résistance mécanique,
- A% : Allongement

Les préformes de fonderie ont subit différents traitements métallurgiques avant l'opération de forge, ils sont décrits ci-après:

**Tableau n°2 : Gammes de forge utilisées.**

| **Cas de test** | **Gamme** |
|---|---|
| A | sans α**-**case - Préchauffe 940 °C/20 min - Frappe |
| B | avec α-case- Préchauffe 940 °C/20 min - Frappe |
| C | sans α-case- 1h à 1000 °C+Trempe (β-transus) - Préchauffe 940 °C/20 min - Frappe |
| D | sans α-case- Préchauffe 1h à 1000 °C - Frappe |

Le tableau T3 ci-dessous transmet les résultats issus du tableau T2.

On obtient les caractéristiques mécaniques suivantes qui présentent une nette amélioration par rapport à la fonderie brute et s'approchent de la fonderie + HIP (Pressage à chaud Isostatique):

**Tableau n°3 : Caractéristiques mécaniques après forge de préformes.**

| | **Rp0,2 [Mpa]** | **Rm [Mpa]** | **A% [%]** |
|---|---|---|---|
| A | 920 | 955 | 8,2 |
| B | 910 | 952 | 7,5 |
| C | 967 | 1033 | 8,8 |
| D | 878 | 932 | 10,1 |

On note que l'opération C dans le tableau T3 est le meilleur compromis par rapport aux différentes caractéristiques de mesure.

Il a ainsi été démontré les avantages spécifiques et inattendus du procédé nouveau selon l'invention dans l'application de pièces en titane.

Ce procédé conduit à des pièces en titane issues de fonderie + forge dont les caractéristiques mécaniques sont proches des pièces issues de fonderie + HIP (Pression à chaud Isostatique). Il est adapté aux grandes cadences.

Ce procédé permet des formes plus complexes obtenues en 1 seule étape de forge, par rapport aux procédés traditionnels de forge qui comprennent plusieurs étapes, sans avoir à extraire la forme finale par usinage d'un lopin à forte surépaisseur par rapport à la pièce finie (économie de temps d'usinage et de matière) en fonction des exigences sur la micro structure.

La conformation de la pièce à sa forme finale peut se faire sur des équipements moins puissants de part la plus faible quantité de matière mise en oeuvre.

Ce procédé permet de produire des pièces en titane à moindre coût en remplaçant l'opération traditionnelle après fonderie de HIP (Pressage à chaud Isostatique) par une opération de forge suivant une étape préalable de réalisation d'une préforme en titane.

Les pièces en titane traitées selon le procédé de l'invention peuvent relever de différentes applications et utilisations, notamment et non limitativement pour des composants et équipements de véhicules. D'autres applications peuvent être envisagées, notamment dans le domaine de la fabrication de prothèses à usage médical.

## Revendications

1. Procédé de fabrication d'une pièce dans le domaine de l'automobile et dans le domaine médical, selon lequel :
- on coule du titane pour obtenir la pièce après solidification au plus proche de la forme finale,
- on démoule la pièce après la coulée,
- on réchauffe la pièce,
- on positionne la pièce coulée dans une matrice pour la soumettre à une opération combinée de pressage et de forgeage pour obtenir la forme finale de la pièce.
